# EUROPEAN PATENT APPLICATION

(11) **EP 1 873 983 A2**
(43) Date of publication of application: **02.01.2008**
(21) Application number: 07111094.4
(22) Date of filing: 26.06.2007
(51) Int. Cl.: H04L 12/56

(54) **Wireless telecommunication apparatus and wireless telecommunication method**

(30) Priority: 29.06.2006 JP 2006178916
(71) Applicant: Fujitsu Ltd., Kawasaki-shi, Kanagawa 211-8588 (JP)
(72) Inventor: Shimizu, Hirotoshi, Kawasaki-shi, Kanagawa 211-8588 (JP)
(74) Representative: Wilding, Frances Ward

(57) **Abstract**

In a wireless telecommunication system (1) employing a time division multiple access (TDMA) system, a scheduler of a base station (2) determines an allocation of a first frame and a second frame for a first data set to be transmitted to a terminal (3) and a second data set to be transmitted thereto after the first data set. A generation unit generates scheduling information for notifying the terminal (3) of the timing of transmitting the second data set on the basis of a relative number of frames for indicating the number of second frames relative to that of the first frame. An addition unit adds scheduling information generated by the generation unit to a control channel corresponding to the first data set and sends the result to the terminal (3).

## Description

### Background of the Invention

### Field of the Invention

The present invention relates to a wireless telecommunication technique adopting a Time Division Multiple Access (TDMA) system and in particular to a technique for stopping a reception circuit of a terminal apparatus in between frames transmitted to a station other than the terminal apparatus itself.

### Description of the Related Art

TDMA is used for telecommunication standards such as High-Speed Downlink Packet Access (HSDPA), Worldwide Interoperability for Microwave Access (WiMAX), and super 3G and 4G, all of which are expected to be more popular in the future. A TDMA transmission system is capable of implementing dedicated channels by a plurality of mobile stations (MSs) receiving downlink access channels from a base station (BS) in units of frames in a time division and adjusting transmission speed by increasing or decreasing the number of transmission frames. The TDMA system is also considered to be an important technique for expanding transmission capacity and securing user-dedicated channels in a telecommunication (sometimes abbreviated as "telecom" hereinafter) system using Orthogonal Frequency Division Multiplexing (OFDM). Such a technique is expected to become increasingly important as burst packets of arbitrary lengths such as Ethernet (a registered trademark) frames become mainstream.

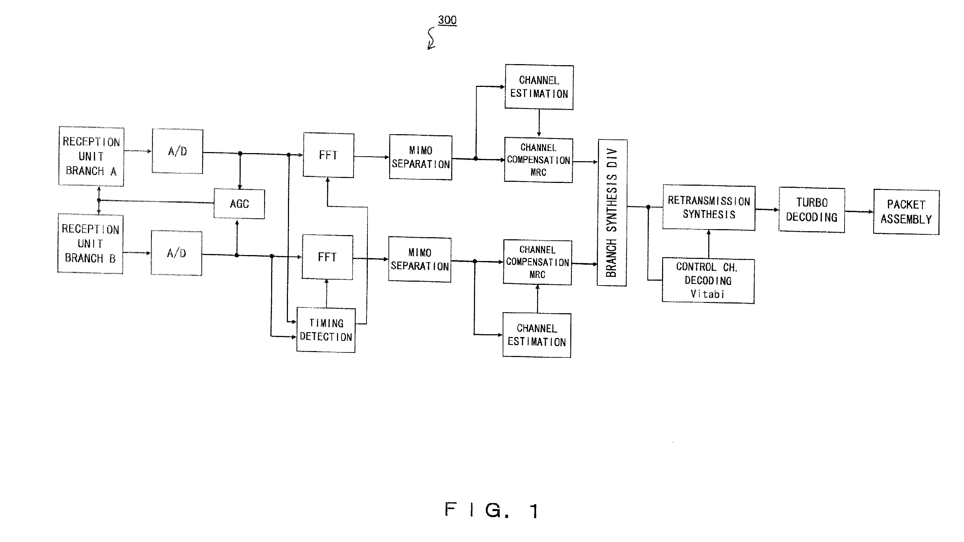

Fig. 1 is a functional block diagram of a conventional mobile station MS. The conventional OFDM TDMA cellular system is configured in a manner such that a mobile station 300 monitors a control channel constantly for increasing maximum transmission speed. That is, the mobile station 300 is incapable of recognizing the time at which a frame addressed to itself, and notifies a dedicated data channel decoding process unit of decoded information to the effect of receiving data addressed to the station itself when successfully judging whether or not the received data is addressed to the station itself.

In a system capable of realizing wireless telecom by means of a diversity reception system, a fast Fourier transform (FFT) is executed for each branch for carrying out a synthesis process; in this FFT a plurality of FFT circuits need to operate simultaneously, resulting in a relative increase in throughput. This in turn causes the power consumption for an overall process including the FFT process to increase with transmission speed.

Accordingly, Laid-Open Japanese Patent Application Publication Nos. 2002-44012, H07-162358 and 2005-277599 provide various techniques for suppressing the power consumption at a mobile station by stopping operations unnecessary for receiving data.

One factor that causes increased power consumption of a mobile station with increased transmission speed is an increased number of demodulations in a certain length of time. The power consumption in a demodulation circuit such as the FFT may increase, but there is a limitation in the capacity of the battery of a mobile station. Consequently, the length of time in which the mobile station is able to continuously communicate decreases with the transmission speed. As for a mobile station equipped with a diversity reception for improving reception performance, there is a similar problem with the length of time in which the station is able to communicate decreasing with the number of reception systems in operation, because of an increased power consumption in proportion with the aforementioned number.

Furthermore, as a result of a shortened demodulation interval that is associated with an increased transmission. speed, the establishment of timing becomes difficult, in particular for a mobile station, when receiving data to carry out a peripheral search when a handover is performed from one frequency to another, and therefore the system becomes less convenient to use. Meanwhile, an increased use of a multilevel modulation for the purpose of improving the efficiency of wireless networks causes the automatic gain control (AGC) of a radio frequency (RF) signal processing unit operate frequently, resulting in the gains of a received signal being changed over frequently as well. This causes a characteristic of the received signal to be degraded and brings about the problem of a drastic reduction in throughput.

### Summary of the Invention

It is desirable to provide a technique for solving the problem of increased power consumption and degraded telecommunication quality in a mobile station that occurs in association with increased transmission speed in a wireless telecommunication.

According to an embodiment of an aspect of the present invention, there is provided a wireless telecommunication apparatus employing a time division multiple access system, comprising: a scheduling unit for determining an allocation of a first frame and a second frame for a first data set to be transmitted to a terminal apparatus and a second data set to be transmitted thereto after the first data set; a generation unit for generating scheduling information for notifying the terminal apparatus of the timing of transmitting the second data set on the basis of a relative number of frames for indicating the number of second frames relative to that of the first frame; and an addition unit for adding scheduling information generated by the generation unit to a control channel corresponding to the first data set and sending the scheduling information to the terminal apparatus.

The scheduling unit of embodiments of the present invention allocates frames one after another to data to be transmitted to the terminal apparatus. When transmitting the first data set to the terminal apparatus by allocating it to the first frame, the addition unit adds information of the second frame allocated to the second data set to be transmitted to the terminal apparatus next; that is, it adds the scheduling information to a control channel. At the terminal apparatus, if the first data set is judged to be data addressed to the terminal apparatus itself, scheduling information included in the control channel is read out. It is configured to be capable of stopping, upon the occurrence of an unnecessary operation of the terminal apparatus, during a predetermined time period indicated by the scheduling information.

The scheduling information may be constituted by the number of transmission stop frames indicating, for example, the number of frames during which a predetermined circuit such as a demodulation circuit is stopped at the terminal apparatus. Stopping a reception circuit such as a demodulation circuit in accordance with the number of transmission stop frames makes it possible to suppress the power consumption in the terminal apparatus without influencing a process for receiving data addressed to the station itself.

Alternatively, the scheduling information can be constituted by the number of transmission start frames indicating the number of frames that exist between the time of the receiving data stopping and the receiving data restarting in the terminal apparatus. The scheduling information stops a demodulation circuit or other such circuit without influencing the process for receiving data addressed to the station itself, making it possible to suppress the power consumption in the terminal apparatus when there is the above described number of transmission stop frames.

The scheduling information may be constituted by any value of a set of discrete values. Stopping an operation of a circuit during a predetermined time period based on such a value makes it possible to suppress the power consumption in the terminal apparatus in the manner of the above description. Furthermore, the scheduling information may be constituted by a channel bit.

The terminal apparatus may comprise a diversity reception in which a part of the operation of a reception antenna is stopped in the terminal apparatus during a time period indicated by the scheduling information, thereby stopping a process for receiving data. As in the case of stopping a demodulation circuit or other such circuit, the power consumption of the terminal apparatus can be suppressed.

The terminal apparatus may be configured to perform an automatic gain control during a time period indicated by the scheduling information. Alternately, the terminal apparatus may be configured to perform a search for carrying out a handover from one frequency to another during a time period indicated by the scheduling information. The time period indicated by the scheduling information is a frame allocated to another station, and therefore the problem of having a degradation of communication characteristic does not occur even if automatic gain control is actively performed. Also, the active carrying out of a search during a time period indicated by scheduling information makes it possible to solve the problem, associated with an increase in transmission speed, of being unable to secure the time for a search.

Embodiments of the present invention may utilize a result of a scheduling process at a base station that allocates resources to each mobile terminal apparatus and may notify, via a control channel, individual mobile stations of the timing for the next transmission of data. Referring to the information unattached to the control channel, the mobile station stops the operation of a circuit that does not need to be operating for a frame with which data addressed to the apparatus itself is not transmitted during a predetermined time period, performs automatic gain control actively, and carries out a search for a handover from one frequency to another. This configuration enables the improvement of various problems occurring in association with an increased transmission speed.

### Brief Description of the Drawings

Fig. 1 is a functional block diagram of a conventional mobile station;
Fig. 2 is a configuration diagram of a telecommunication system according the present embodiment;
Fig. 3 is a functional block diagram of a terminal;
Fig. 4A is a diagram describing the power consumed in a conventional terminal;
Fig. 4B is a diagram describing the power consumed in a terminal according to the present embodiment;
Fig. 5 is a diagram describing a scheduling process at a base station (part 1) ;
Fig. 6 is a diagram describing an operation at a terminal (part 1);
Fig. 7 exemplifies a table related to scheduling information;
Fig. 8 is a diagram describing a scheduling process at a base station (part 2);
Fig. 9 is a diagram describing an operation at a terminal (part 2);
Fig. 10 is a diagram showing a time chart of a reception circuit related to a terminal comprising one antenna system;
Fig. 11 is a diagram showing a time chart of a reception circuit related to a terminal comprising two antenna systems;
Fig. 12 is a diagram showing another time chart related to a reception circuit of a terminal; and
Fig. 13 is a diagram showing yet another time chart related to a reception circuit of a terminal.

### Description of the Preferred Embodiments

The following is a detailed description of the preferred embodiment of the present invention, referring to the accompanying drawings.

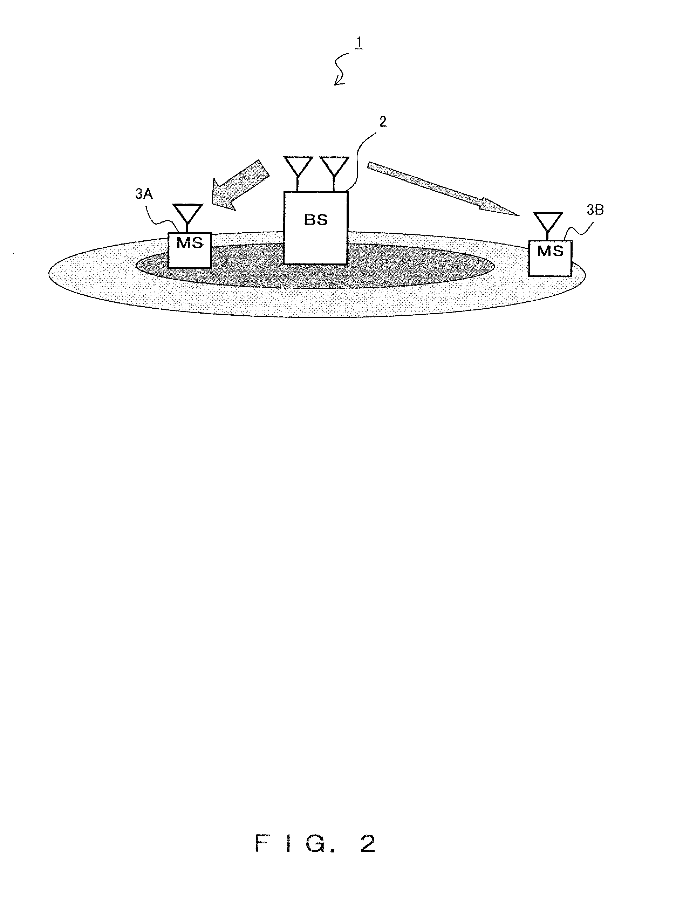

Fig. 2 is a configuration diagram of a wireless telecommunication ("wireless telecom" hereinafter) system 1 according the present embodiment. The wireless telecom system 1 employing the TDMA system comprises a base station (BS) 2 and mobile stations (MSs or mobile terminals--abbreviated as "terminal" hereinafter) 3. Fig. 1 only shows one base station 2 and two terminals 3A and 3B as being under the management of the base station 2 in order to simplify the configuration.

The wireless telecom system 1 employing the TDMA system, e.g., a cellular system of the 3.5 generation and thereafter, is configured to be applicable to many transmission resources, that is, frames are configured to be applicable a terminal 3 having good reception quality, for the purpose of increasing the sector throughput. The terminal 3 with many transmission resources allocated to it has an improved throughput. The reception quality at the terminal 3 is generally higher when the distance from the base station 2 is shorter. Among the two terminals shown in the example shown in Fig. 2, the reception quality is higher at terminal 3A, which is positioned closer to the base station 2, than it is at terminal 3B, which is positioned relatively far therefrom.

In the TDMA system, scheduling is carried out by a scheduler of the base station 2 and more frames are allocated to a terminal 3 having a higher reception quality. A scheduling process is enabled to refer to frames accumulated in a buffer and to recognize information of, for example, how many frames later comes the timing for transmitting the next data set respectively to the terminals 3A and 3B shown in Fig. 2. By using this scheduling process, information indicating the timing for the next transmission to the individual terminals 3 is transmitted to the terminal 3 as scheduling information when transmitting a frame. The present embodiment is configured to include the scheduling information in a control channel. The terminal 3 reads scheduling information by referring to the control channel and stops a demodulation circuit during a predetermined time period on the basis of the scheduling information, thereby suppressing the power consumption in a reception circuit.

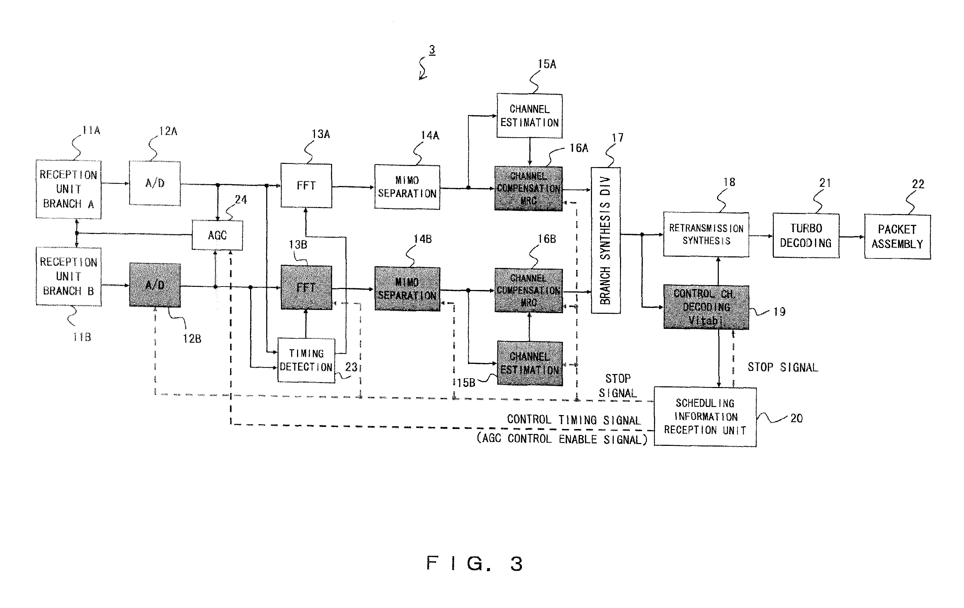

Fig. 3 is a functional block diagram of a terminal 3. The terminal 3 shown in Fig. 3 is constituted by an OFDM receiver of a TDMA system. Such a reception terminal commonly adopts a Multiple Input Multiple Output (MIMO) spatial multiplexing system in order to utilize a wireless band effectively. A plurality of antenna is provided for the terminal 3 when adopting a MIMO spatial multiplexing system. In the following description, a reception system is expressed by "branch". The following description deals with a terminal 3 of a two-branch configuration.

The terminal 3 comprises a reception unit (i.e., a branch) 11, an analog/digital (A/D) conversion unit 12, an FFT 13, a MIMO separation unit 14, a channel estimation unit 15, a channel compensation unit 16, a branch synthesis unit 17, a retransmission synthesis unit 18, a control channel decoding unit (i.e., Vitabi decoding unit) 19, a scheduling information reception unit 20, a turbo decoding unit 21, a packet assembly unit 22, a timing detection unit 23 and an automatic gain control circuit (AGC) 24.

Note that a component comprising two systems due to the two-branch configuration in the above-noted components constituting the terminal 3 is denoted by the sign "A" or "B" in Fig. 3. The sign "A" or "E" is used in the following only when it is necessary to specify either one of two systems, while is the signs are omitted when it is not necessary to distinguish the two systems from each other.

The reception unit 11 is a reception system including an antenna. The A/D conversion unit 12 converts a radio wave received by the reception unit 11 into a digital signal. The automatic gain control circuit (AGC) 24 calculates the power and feeds it back to the reception unit 11, thereby maintaining the input level of the A/D conversion unit 12 at an optimal level.

The FFT 13 separates an OFDM signal into sub-carrier signals in a frequency domain by means of a fast Fourier transform. The MIMO separation unit 14 decodes signals individually separated by the FFT 13 into a signal for each antenna. The channel estimation unit 15 estimates the of a multi-pass of the received signal on the basis of the signal of each antenna. The channel compensation unit (MRC) 16 carries out channel compensation by using a value estimated by the channel estimation unit 15. The branch synthesis unit 17 synthesizes signals compensated at the respective channel compensation units 16 (i.e., 16A and 16B).

The control channel decoding unit (i.e., Vitabi decoding unit) 19 carries out a Vitabi decoding for the control channel among the synthesized signals. Then the control channel decoding unit 19 compares identification (ID) information included in the control channel with a preset ID of the terminal station itself and, if both are identical, judges it to be data addressed to the terminal station itself. The retransmission synthesis unit 18 stores the judged data as data addressed to the station itself.

The turbo decoding unit 21 carries out a turbo decoding process and judges whether it has been normally received on the basis of a Cyclic Redundancy Checking (CRC) operation of the decoded data and its similarity with the CRC bit stored in the last part of the decoded data. If "normally received" is the judgment, the result is reported to the retransmission synthesis unit 18 which is then released.

If "not identical" is the judgment, the turbo decoding unit 21 transmits a not-acknowledge (NACK) signal to the base station 2, adds the retransmitted reception signal and the signal stored in the retransmission synthesis unit 18, and decodes the result once again. When the data is not identical to the CRC bit stored in the last part of the decoded data, the operation is repeated until the CRC becomes identical, or up to the maximum number of retransmission times. A signal thusly validated as being normal is sent to the packet assembly unit 22 that synthesizes a data packet.

The above described scheduling information is taken out and given to the scheduling information reception unit 20 when Vitabi-decoding the control channel in the control channel decoding unit 19. The scheduling information reception unit 20 transmits, to each circuit, a signal for carrying out the process to stop a circuit such as a demodulation circuit during a time period in which a frame is addressed to the other stations on the basis of the received scheduling information. Note that the demodulation circuit here points to a circuit that is comprised of the FFT 13, MIMO separation unit 14, channel estimation unit 15 and channel compensation unit 16 and that it is for carrying out the process for converting an analog signal to a digital signal.

The preferred embodiment is configured to stop the A/D conversion unit 12B and demodulation circuit of the reception system B, among the two reception systems, in accordance with the scheduling information and also to stop the control channel decoding unit 19 and the channel compensation unit 16A of the reception system A. The circuits of the operations being stopped are indicated by dark gray shading in Fig. 3. Having transmitted stop signals to the circuits indicated by the dark gray shading for having them stopped, the scheduling information reception unit 20 starts counting the number of frames by using an internal counter or such. Upon the elapse of a predetermined period, it transmits a signal for starting the stopped circuits.

Also, the scheduling information reception unit 20 transmits a control timing signal (which is called an AGC mode control signal) to the automatic gain control circuit 24 so as to cause it to execute active AGC control at a prescribed timing for the automatic gain control circuit 24.

Also, the scheduling information reception unit 20 transmits a signal to a control unit (not shown herein) controlling a reception circuit of the terminal 3 shown in Fig. 3, and transmits a control timing signal (i.e., a search mode control signal) for carrying out a cell search for a handover between different frequencies.

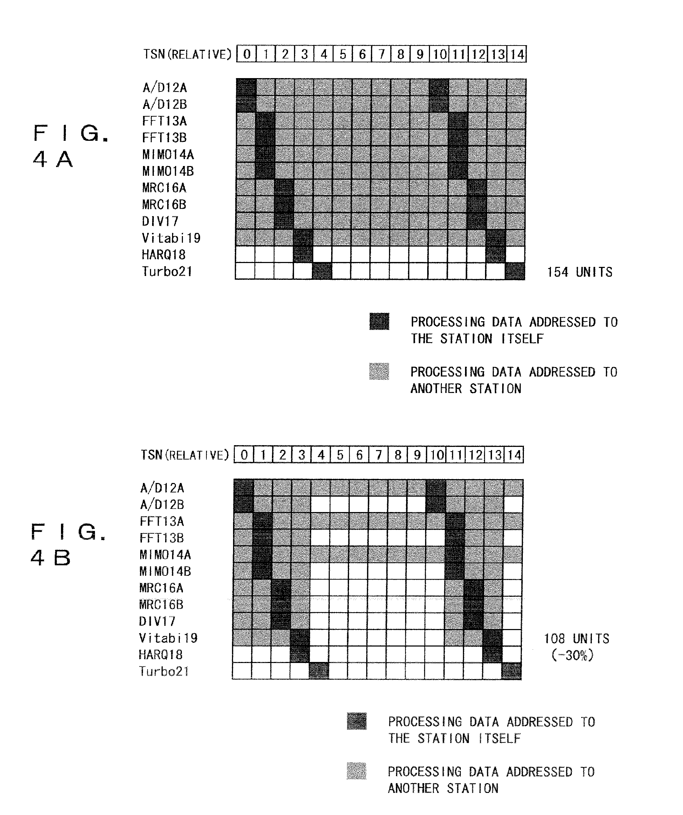

Figs. 4A and 4B are diagrams for describing the power consumed in the terminal 3 in a two-branch configuration. Fig. 4A illustrates the power consumption in the respective unit of the conventional terminal 3 and Fig. 4B illustrates the power consumption in the respective unit of the terminal 3 according to the present embodiment. The terminal 3 comprises two reception systems as shown in Fig. 3. In the drawings, the individual units comprising the terminal 3 are listed vertically and the transmission time interval (TTI) is indicated horizontally, with the timing of the A/D conversion unit 12 receiving data addressed to the station itself being the reference. In the representation of a circuit executing a process, the TTI in which a frame addressed to the station itself is processed is shown in black, the TTI in which a frame addressed to another station is processed is shown in gray, and the TTI in which a process is not executed (i.e., the operation of the circuit is being stopped) is shown in white.

In the conventional terminal, the units spanning from the A/D conversion unit 12 to the control channel decoding unit 19 carrying out a Vitabi decoding constantly operate even in the time period in which data addressed to another station is transmitted from the base station 2, as shown in Fig. 4A. In the case of reception via a MIMO comprising two antennas, two reception systems are in operation.

In contrast, in the terminal 3 according to the present embodiment, the control channel decoding unit 19, having decoded a control channel of the data addressed to the station itself, reads scheduling information and gives it to the scheduling information reception unit 20 as shown in Fig. 4B. The scheduling information reception unit 20 then stops the operation of circuits that are unnecessary for operation during a predetermined time period, that is, between six and seven frames in the example in Fig. 4B, in accordance with the received scheduling information.

As described above, the scheduling information is set by the base station 2 which judges the timing of the next data transmission when allocating frames for each terminal 3 with a scheduler. Therefore, when data addressed to the station itself is next transmitted in 10 frames as shown in Fig. 4B, it is possible to stop the operation of a circuit that is unnecessary for operation for a frame allocated to another station by, for example, setting "6 (frames)," which is a stop period of no more than 10 frames, as scheduling information.

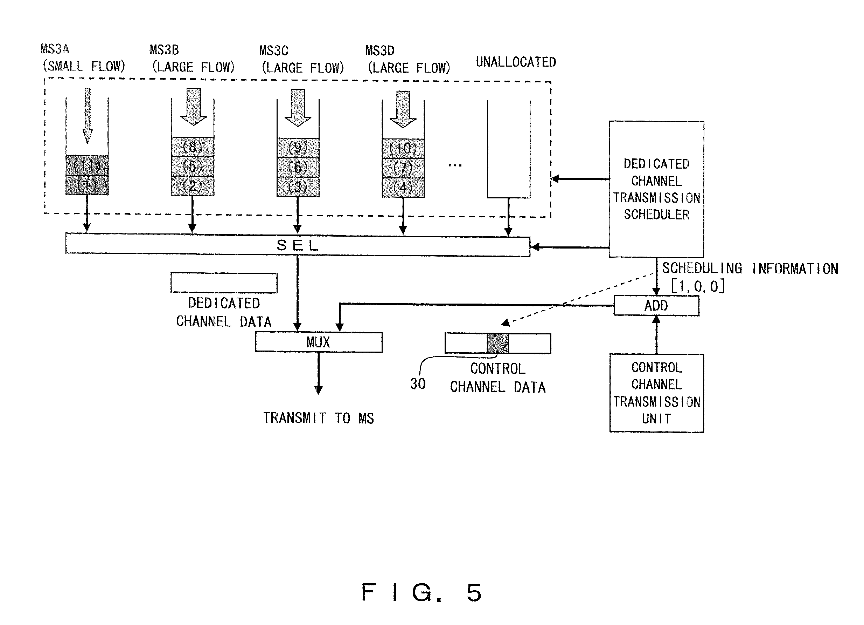

The following are concrete descriptions of a method for setting scheduling information by utilizing a scheduling function of the base station 2 and a method for stopping the operation of a prescribed circuit at the terminal 3 by using the scheduling information referring from Fig. 5 to Fig. 9.

Fig. 5 is a diagram for describing a scheduling process at the base station 2 (part 1). The example shown in Fig. 5 shows four terminals 4 being connected under the management of the base station 2. Note that in the drawing terminal 3A is expressed as "MS 3A", and terminals 3B, 3C, 3D and so on are expressed as MS 3B, MS 3C, MS 3D and so on.

The base station 2 buffers data which is to be sent to the individual terminals via a queue, thereby making it possible to appropriately allocate a given data volume transmitted to an individual terminal 3 in accordance with fluctuations in telecom quality. That is, the queue is such that the buffer volume is larger in a queue related to a terminal with a higher flow rate and the probability of a frame being allocated is higher with such a queue. Therefore, pieces of data to be transmitted by the next allocation of a resource are accumulated in the queue, as shown in Fig. 5. The amount of resource allocation that is performed is reduced for a terminal with a low flow rate (corresponding to "MS 3A"' in the example shown in Fig. 5) and pieces of data to be transmitted next are accumulated as in the terminal with a high flow rate. These allocations of frames are carried out by the use of scheduling techniques in the conventional manner.

Here, numerals attached to data accumulated in the queue shown in Fig. 5 represent the sequence number of each transmission frame, that is, the sequence number transmitted from the base station 2. For example, the data transmitted from the base station 2 by the first frame counted from the reference frame is addressed to terminal 3A and is indicated by the number "1" in the drawing, and the data transmitted next from the base station 2 is addressed to terminal 3B and is indicated by the number "2" in the drawing. The following description defines a transmission frame counted from a certain frame (as a reference) as a relative transmission frame, and expressed data allocated to the nth frame to be the nth frame data.

As described above, a queue destined to terminal 3A (for example) already accumulates data to be transmitted next; that is, it accumulates the eleventh frame data during the time that it is reading the first frame data. Utilizing this, the first frame data is transmitted by adding scheduling information indicating the timing for transmitting the data addressed to terminal 3A next.

The following is a concrete description of an operation carried out for adding scheduling information at the base station 2.

First, the scheduler requests scheduling information of the data which is allocated with a frame during scheduling. The scheduling information is acquired by using, for example, the value of a relative transmission frame of data accumulated next in the queue, the method of which is described later. Then, a combination of the acquired scheduling information and a control signal given from a control channel transmission unit managing the transmission of a control signal obtains control channel data. In this event, the scheduling information is stored in a prescribed area 30 of the control channel data, as shown in Fig. 5.

A selector (SEL) retrieves a resource in a sequence indicated by the relative transmission frame, generates dedicated channel data, and feeds it to a multiplexing apparatus (MUX) sequentially. The control channel data generated is given to the multiplexing apparatus corresponding to a process timing of the selector. The multiplexing apparatus transmits dedicated channel data and control channel data corresponding to the dedicated channel data to the respective terminals 3.

Terminal 3A receives the scheduling information stored in a prescribed area 30 of the control channel data together with the first frame data. Analyzing the scheduling information enables the terminal 3 to obtain information related to a time period until data addressed to the station itself (the eleventh frame data herein) is transmitted from the base station 2.

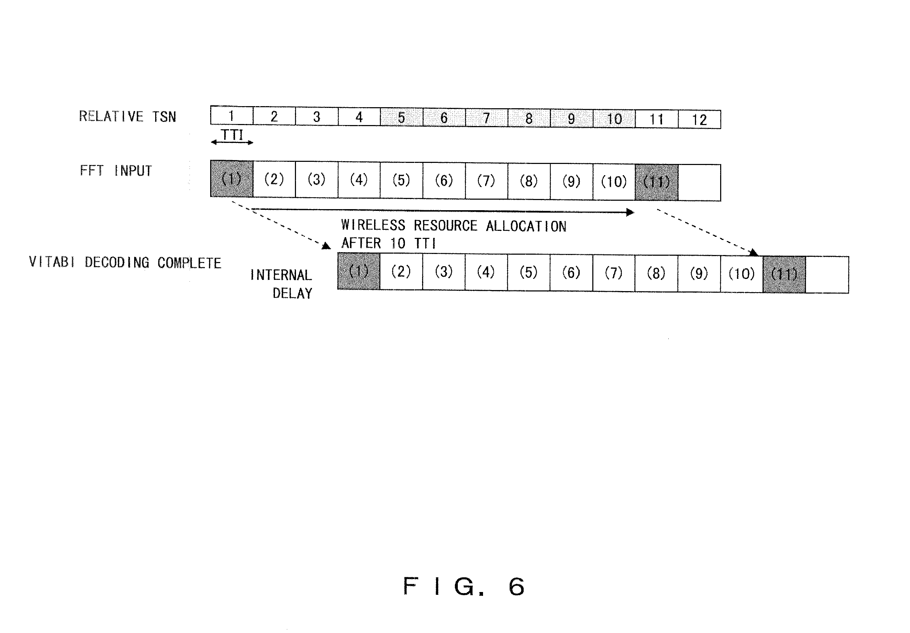

Fig. 6 is a diagram describing an operation at the terminal 3. For simplicity of description, a relative transmission sequence number (which is expressed as "TSN (Transmission Sequence Number) " in Fig. 6) at the time of the first frame data addressed to the station itself being input is defined as "1". The relative transmission sequence number is allocated so as to correspond to a transmission time interval (TTI) of one unit. In the following description, a relative transmission sequence number with a certain transmission time interval as a reference is expressed as "the relative sequence number", and in Fig. 3 a transmission time interval is set in which the first frame data addressed to the station itself is input into the FFT 13 in Fig. 6.

As described in the description of Fig. 3, a judgment of whether or not the received data is addressed to the station itself is made at the control channel decoding unit (i.e., Vitabi decoding unit) 19. The control channel decoding unit 19 reads scheduling information from the data judged as being addressed to the station itself and passes the information to the scheduling information reception unit 20. In other words, the scheduling information included in the data addressed to the station itself is recognized at the terminal 3 as a result of the data addressed to the station itself being input into the control channel decoding unit 19.

Meanwhile, in order to process data addressed to the station itself, the entirety of the individual circuits in the previous stage of the control channel decoding unit 19 need to be in operation. That is, to set a time period in which it is possible to stop the individual circuits by determining a frame allocated to another station, it is necessary to consider further the time difference from when the terminal 3 starts a process until an input is made to the control channel decoding unit 19 in addition to the time period ending when the next frame is accumulated in the buffer at the scheduler of the base station 2. A delay caused between the FFT 13 and control channel decoding unit 19 is defined as an "internal delay" herein. On the basis of this definition, the amount of internal delay is 3 TTI, that is, a time period of three frames according to the example in Fig. 6.

Taking the internal delay into consideration, the time period that does not influence the process for receiving data addressed to the station itself even if the demodulation circuit and such are stopped in the example of Fig. 6 is between Nos. 5 and 10 in terms of the relative transmission sequence number. When setting scheduling information in the base station 2, an appropriate value is set as the number of frames allowing stoppage (noted as "the number of stoppage allowing frames" hereinafter) with such an internal delay at the terminal 3 being taken into consideration.

That is, it is preferable to set the number of stoppage allowing frames using the following method: remove the internal delay of three frames (i.e., Nos. 1 to 3 in terms of the relative sequence number (TSN) shown in Fig. 6) and one frame (corresponding to No. 4 in terms of the relative sequence number shown in Fig. 6) required for a process for retrieving scheduling information at the control channel decoding unit 19 from the period (i.e., 10 frames) until receiving data addressed to the station itself is reached, resulting in the number of stoppage allowing frames being set as 10 - (3+1) = 6 (frames). This makes it possible to activate the individual circuits securely for a frame with which data addressed to the station itself is to be received while stopping the individual circuits that do not need to be operating for frames with which data addressed to another station is received at the terminal 3.

The number of stoppage allowing frames is set by designating a predetermined value as scheduling information in a channel bit for example. A correlation between the channel bit and the number of stoppage allowing frames needs to be held as common information between the base station 2 on the side that sets the channel bit and relays a notification of it and the terminal 3 on the side that receives the notification. The following is a description of a table held by the base station 2 and terminal 3 according to the present embodiment.

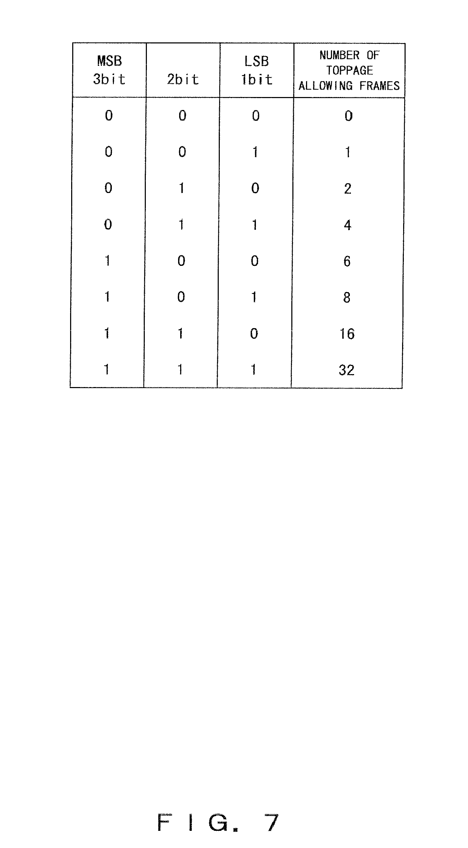

Fig. 7 exemplifies a table related to scheduling information. Fig. 7 exemplifies a table in the configuration of using three bits of a control channel for scheduling information for providing the number of stoppage allowing frames in eight ways. A combination of each bit from the most significant bit (MSB) to the least significant bit (LSB) of the channel bit is noted as [a1, a2, a3], where the most significant bit is a1 and the least significant bit is a3. A [0, 0, 0] indicates that the number of stoppage allowing frames is zero ("0")

The present embodiment is configured to set, as scheduling information, a bit string corresponding to the largest number of stoppage allowing frames among the combinations of bits corresponding to a value no more than the number of stoppage allowing frames acquired at the base station 2.

In the above described example, the number of stoppage allowing frames acquired at the base station 2 is six frames, and the table shown in fig. 7 provides eight values, i.e., 0, 1, 2. 4, 6, 8, 16 and 32, which are given in ascending order, as the settable number of stoppage allowing frames. A value of no more than six frames is acquired at the base station 2 and also the maximum value is "6" among the eight values of stoppage allowing frames that is set in the table. Therefore, a bit string [1, 0, 0] corresponding to "6" is selected as a channel bit and is written to a prescribed area 30 of the control channel shown in Fig. 5.

The selection of a bit string under such conditions enables the terminal 3 to get the circuits started securely to carry out the processing of data addressed to the station itself, while unnecessary operations are stopped for frames with which data addressed to another station is received.

The above described telecom method is applicable to, for example, the case of a new terminal 3 starting to access the wireless telecom system 1 by way of the base station 2. The following is a description of a scheduling process at the base station 2 and of a process at the terminal 3 when a new terminal 3 connects itself to the wireless telecom system 1.

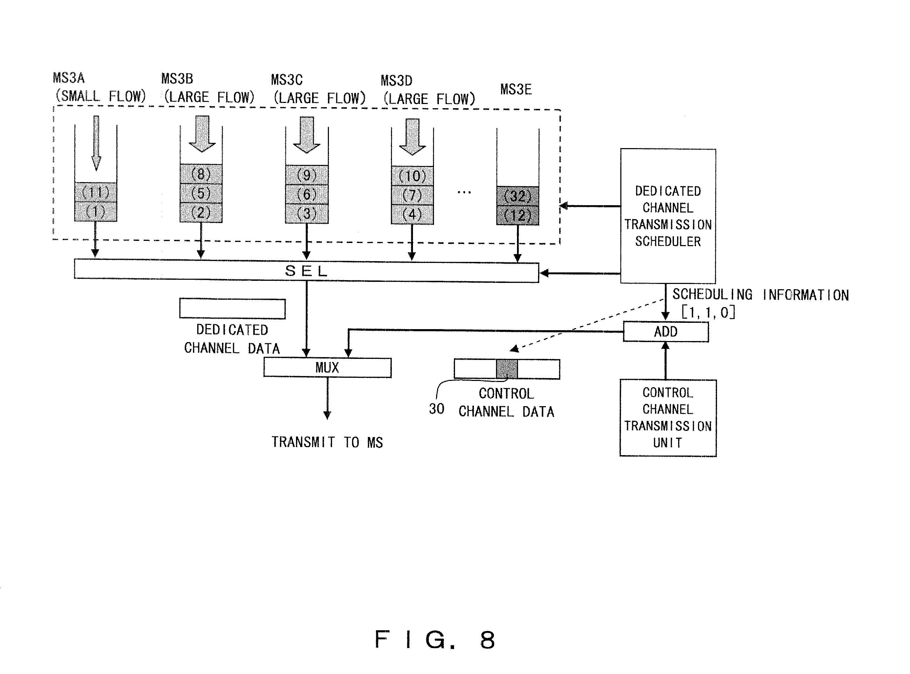

Fig. 8 is a diagram describing a scheduling process at the base station 2 (part 2). The operations of the individual units shown in Fig. 8 are the same as those of Fig. 5 and therefore the description is omitted; instead the description here deals with the process in the case of adding a terminal 3 (i.e., terminal 3E) connecting itself to the wireless telecom system 1.

The base station 2 allocates a resource for terminal 3E (noted as MS 3E in Fig. 8) that has started connecting to the network anew. For the convenience of description, the assumption here is that the allocation of a resource for terminal 3E is carried out at the time that a scheduling is completed for the eleventh frame data in the case of Fig. 8.

Fig. 8 shows a queue for terminal 3E. At the point in time when a resource is allocated to terminal 3E, the allocation up to the eleventh frame is complete, and therefore the scheduling for terminal 3E is started from the twelfth frame. Thereafter, the scheduling for all of the terminals 3 under the management of the base station 2 is carried out in accordance with the volume of data to be transmitted to an individual terminal 3, the reception quality of each terminal 3, and other such considerations. Now let the 32nd frame be the one allocated to terminal 3E next to the twelfth frame, as shown in the example of Fig. 8. In this case, the 20-frame period between the 12th and 32nd frames (20 = 32 - 12) can be judged as a period for data of the terminals 3 other than terminal 3E. As described above, a further consideration of the internal delay occurring in the terminal 3 enables the appropriate setup of the number of stoppage allowing frames.

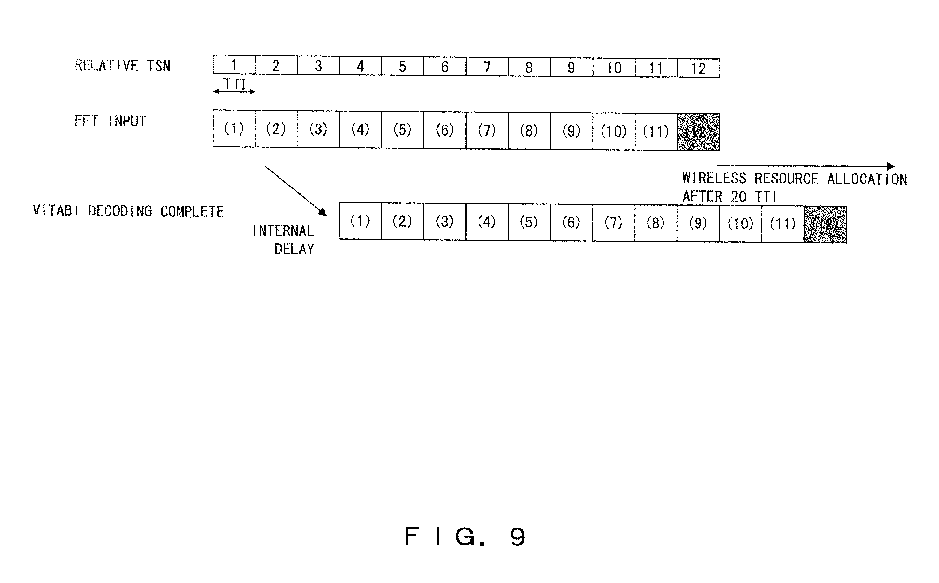

Fig. 9 is a diagram describing an operation at terminal 3E. The relative sequence number (TSN) shown in Fig. 9 is based on the sequence number corresponding to the first frame shown in Fig. 8.

As in the above described case, an internal delay occurs also in the case of terminal 3E, resulting in a shift of timing equivalent to three frames between the control channel decoding unit 19 and FFT 13. As in the above, the base station 2 calculates the number of stoppage allowing frames on the basis of the internal delay at terminal 3E and the result of scheduling at the base station 2.

Specifically for terminal 3E, the number of stoppage allowing frames is set by removing the internal delay of three frames (i.e., Nos. 13 to 15 in terms of the relative transmission sequence number) and one frame (corresponding to No. 16 in terms of the relative transmission sequence number) required for a process for extracting scheduling information, at the control channel decoding unit 19 from the period (i.e., 20 frames = 32 - 12) until data addressed to terminal 3E is next received, resulting in 20 - (3 + 1) = 16 (frames).

The method for storing the set number of stoppage allowing frames in the control channel is similar to the method already described by referring to Fig. 7. The base station 2 selects a bit string of [1, 1, 0] that is correlated with "16 frames" as the number of stoppage allowing frames based on the table of Fig. 7. Here, terminal 3E also holds the table shown in Fig. 7. With this configuration, the terminal 3 reads the number of stoppage allowing frames from the table information and from a channel bit, both of which are shown in Fig. 7, and stops an operation of a predetermined circuit during a period corresponding to the read-out number of stoppage allowing frames (i.e., 16 frames here).

As described thus far, the telecom system according to the above described preferred embodiment enables the base station 2 to recognize the timings of the next transmissions to the respective terminals of a plurality of terminals under the management of the base station 2 when carrying out scheduling at the base station 2. By taking advantage of this, the operation of predetermined circuits, such as demodulation circuits, are stopped in accordance with the number of stoppage allowing frames reported from the base station 2, thereby making it possible to suppress the power consumption in a reception circuit of the terminal 3. The following is a description of an effect of the above described telecom method in the reception circuit of the terminal, referring to a time chart.

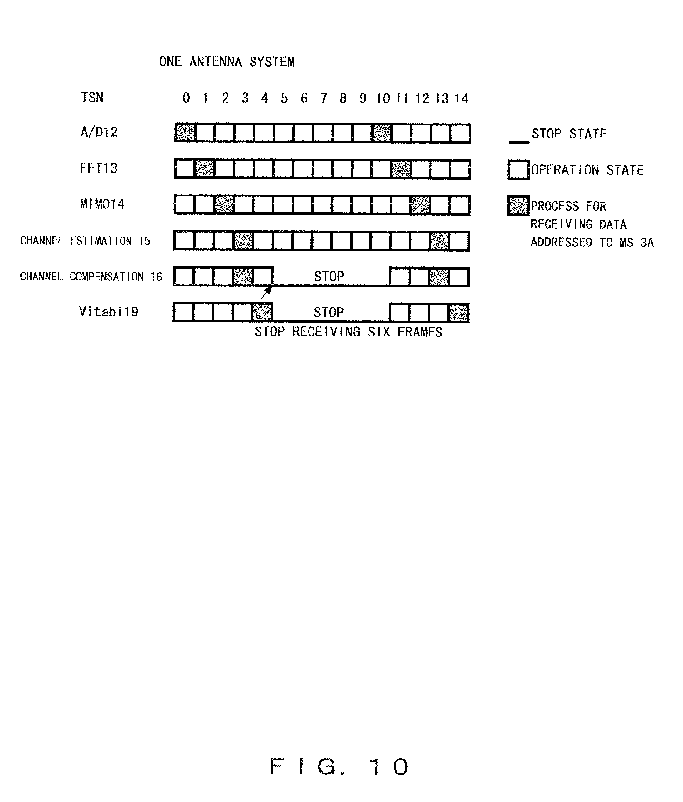

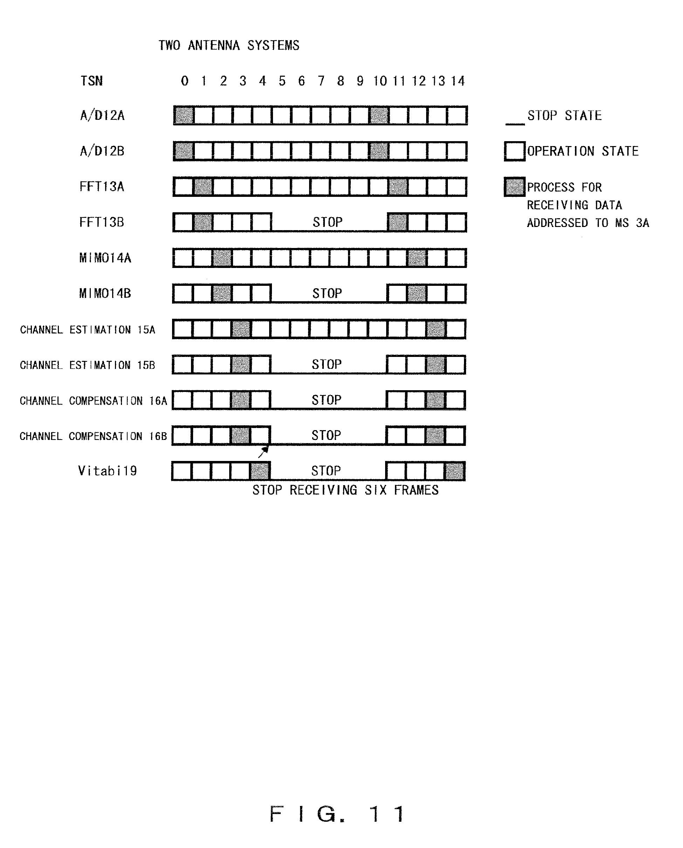

Fig. 10 is a diagram showing a time chart of a reception circuit related to a terminal comprising one antenna system; Fig. 11 is a diagram showing a time chart of a reception circuit related to a terminal comprising two antenna systems. Note that, for the relative sequence number (TSN) drawn on the uppermost part of the drawing, the above description assumes that a signal is input into the A/D conversion unit 12 at the timing corresponding to the first sequence number, whereas Figs. 10 and 11 describe the case of a signal being input into the A/D conversion unit 12 at the timing corresponding to the zeroth sequence number. Also, the frame number and internal delay with which data addressed to the station itself is transmitted after the terminal 3 receives data with the zeroth frame addressed to the station itself are the tenth and third frames, respectively, in this case.

The entirety of the demodulation circuits cannot be stopped even during a time period corresponding to the number of stoppage allowing frames received from a base station for the terminal comprising one system of antennas shown in Fig. 10. Consequently, only predetermined circuits, such as the channel compensation unit 16 and control channel decoding unit (i.e., Vitabi decoding unit) 19, are stopped.

In contrast, one of two reception systems may be stopped during a time period corresponding to the number of stoppage allowing frames for the terminal comprising two systems of antennas shown in Fig. 11. Therefore, the operations of the FFT 13B, MIMO separation unit 14B, channel estimation unit 15B, channel compensation units 16A and 16B, and control channel decoding unit (i.e., Vitabi decoding unit) 19 are stopped. Further, one of the antennas (i.e., the reception unit 11 in the case of Fig. 3) may be stopped, although it is not shown in Fig. 11. A terminal 3 comprising the diversity reception of reception means shown in Fig. 11 may be configured to operate at least one system and stop the rest of the system during a time period corresponding to the number of stoppage allowing frames.

Both of the terminals comprised as shown in Figs. 10 and 11 are configured to transmit the above described stop signal from the scheduling information reception unit 20 to circuits whose operation may be stopped for a frame with which data is be transmitted to another station, thereby making it possible to suppress the power consumption in the stopped circuits.

Incidentally, as above stated, the terminal 3 is enabled to suppress the power consumption by stopping any predetermined circuits, such as a demodulation circuit, during a time period corresponding to a frame allocated to another station. Also, in addition to suppressing the power consumption, it is enabled to improve other problems associated with increased transmission speed by using the scheduling information.

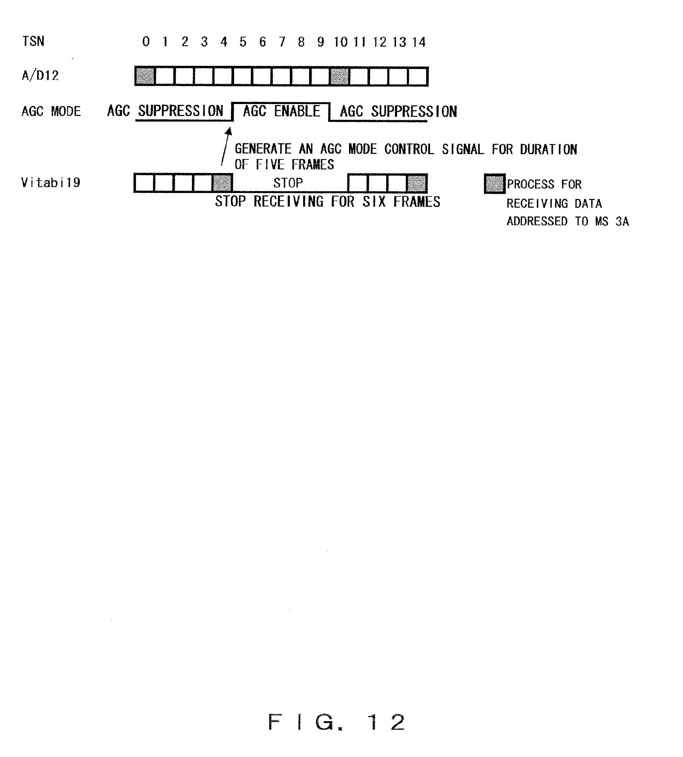

Fig. 12 is a diagram showing another time chart related to a reception circuit of a terminal. Note that Fig. 12 shows only a part of the reception circuit of the terminal 3. As for the relative sequence number (TSN), the assumption here is that a signal is input into the A/D conversion unit 12 at the timing corresponding to the zeroth relative sequence number (TSN), as in the case of Figs. 10 and 11.

As described above, when a signal addressed to the station itself is input into the control channel decoding unit (i.e., Vitabi decoding unit) 19, the scheduling information is handed over to the scheduling information reception unit 20 from the control channel decoding unit 10. The scheduling information reception uni t 20 refers to the table shown in Fig. 7 and obtains the number of stoppage allowing frames, then transmits an AGC control-enable signal to the automatic gain control (AGC) circuit 24 and starts counting the number of frames by using an internal counter. The automatic gain control circuit 24 carries out AGC control freely during the time period indicated by the number of stoppage allowing frames.

When the period corresponding to the number of stoppage allowing frames elapses, the scheduling information reception unit 20 transmits a signal to the automatic gain control circuit 24 to have it stop AGC control. Having received the stop signal, the automatic gain control circuit 24 stops performing the AGC control freely thereafter.

As such, the terminal 3 is configured to carry out AGC control actively during a time period corresponding to the number of stoppage allowing frames, that is, the period for processing a signal addressed to another station, and to suppress AGC control during a time period in which a signal addressed to the station itself is being processed. This configuration makes it possible to improve the conventional problem of degradation of communication characteristic associated with the speeding up of the wireless telecom as a result of the frequent changeover of gains due to AGC control.

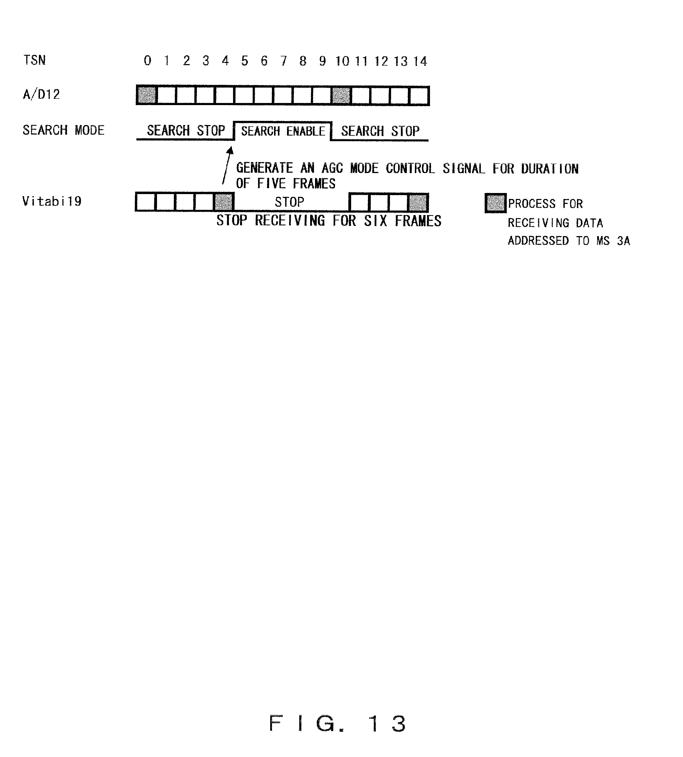

Fig. 13 is a diagram showing yet another time chart related to a reception circuit of a terminal. Fig. 13 also shows only a part of the configuration of the reception circuit of the terminal 3, as in the case of Fig. 12. Also, here it is assumed that a signal is input into the A/D conversion unit 12 at the timing corresponding to the zeroth relative transmission sequence number (TSN), as in Figs. 10 through 12.

Having received the scheduling information from the control channel decoding unit (i.e., Vi tabi decoding unit) 19, the scheduling information reception unit 20 obtains the number of stoppage allowing frames and transmits the generated search mode control signal to a control unit (which is not shown in Fig. 3) for controlling the reception circuit of the terminal 3, then starts counting the number of frames by using an internal counter. Having received the search mode control signal, the control unit gives an instruction to each circuit to begin a search.

Having received the search mode control signal, the A/D conversion unit 12 starts searching for a different wireless network. A synchronism establishment process such as a cell search by a different frequency carrier is performed while maintaining a telecom for carrying out a handover between different frequencies in the search for a different wireless network. When a time period corresponding to the number of stoppage allowing frames elapses, the scheduling information. reception unit 20 transmits a stop signal to the A/D conversion unit 12 to stop the search thereat. Having received, the stop signal, the A/D conversion, unit 12 performs no searches for a different wireless network thereafter.

As such, it is possible to secure a time for carrying out a search even if in the future the unit of time per frame becomes shorter with an increased transmission speed by carrying out a search for a different wireless network in a frame allocated to another station.

As described above, the telecom system according to the present embodiment is configured to notify each terminal 3 under the management by a base station 2 of scheduling information that is information related to the timing of the next transmission of data to the terminal 3 by utilizing a control channel when transmitting data from the base station 2 to the terminal 3. Having received the scheduling information, the terminal 3, if it judges that the received data is addressed to the station itself, reads scheduling information from a prescribed area of the control channel and stops the operation of modulation circuits and such during a predetermined time period on the basis of the readout scheduling information. Alternately, it carries out an AGC control and a search actively for a handover between different frequencies during the predetermined time period. This configuration makes it possible to improve various problems associated with an increased transmission speed, that is, problems such as an increase in power consumption at the terminal 3, degradation of communication characteristic due to the frequent execution of AGC controls, and an inability to secure time for a search.

Note that the above embodiment is configured to set the number of stoppage allowing frames as scheduling information; it is not limited as such, however. It may be configured to set how many frames later another frame is allocated, for example. As in the case of setting the number of stoppage allowing frames, it is possible to judge a frame allocated to the station itself at the terminal 3. Alternately, it may be configured to set the minimum value of the number of frames allocated to another station. It enables the terminal 3 to securely carry out a startup of the stopped circuit (s) and a stopping of processes such as AGC control and searches.

Also, the above described embodiment is configured to store scheduling information in a control channel by using a channel bit; a configuration is not limited as such, however. It may be alternatively configured to store the number of frames acquired at the base station. An instruction for starting the stopped circuit(s) and an instruction for stopping the AGC control and any searches can be carried out more strictly, thereby further increasing benefits such as suppressing the power consumption, preventing degradation of communication characteristics and securing time for a search.

A configuration may further be such that it comprises an invalidation unit for invalidating scheduling information in accordance with a variation of the number of terminals 3 connecting to a telecom network by way of the base station 2. As the number of terminals decreases, the ratio of frames addressed to other stations decreases in relation to the number of terminals, and the benefits of the above described method also decrease. The invalidation unit accordingly transmits information to each terminal 3 by including information invalidating scheduling information in a control channel of a random frame. Having received such information, the terminal 3 stops the above-mentioned process such as the operation of circuitsis stopped during a predetermined time. After stopping the various processes as a result of invalidating the scheduling information, the terminal 3 carries out processes similar to the conventional method.

By this process, the terminal 3 receives data by employing the conventional telecom method when the benefits of the above described telecom method are relatively small, and carries out various processes by using scheduling information when the benefits of the above described telecom method are relatively large. That is, the terminal 3 is enabled to select an appropriate telecom method in accordance with a particular telecom environment. In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A wireless telecommunication apparatus (2) employing a time division multiple access system, comprising:
a scheduling unit for determining an allocation of a first frame and a second frame for first data set to be transmitted to a terminal apparatus (3) and second data set to be transmitted thereto after the first data set;
a generation unit for generating scheduling information for notifying the terminal apparatus (3) of a timing of transmitting the second data set on the basis of a relative number of frames for indicating the number of second frames relative to that of the first frame; and
an addition unit for adding scheduling information generated by the generation unit to a control channel corresponding to the first data set and sending said scheduling information to the terminal apparatus (3).

2. The wireless telecommunication apparatus (2) according to claim 1, wherein
said scheduling information is constituted by number of transmission stop frames information indicating a number of frames not exceeding said relative number of frames, wherein
said terminal apparatus (3) reads the scheduling information and stops a reception circuit within the terminal apparatus (3) during a time period indicated by the number of transmission stop frames information.

3. The wireless telecommunication apparatus (2) according to claim 1, wherein
said scheduling information is constituted by number of transmission start frames information indicating the number of frames not exceeding said relative number of frames, wherein
said terminal apparatus (3) reads the scheduling information and restarts a process for receiving data when a time period indicated by the number of transmission start frames information elapses from the time of a stopping of a process for receiving data.

4. The wireless telecommunication apparatus (2) according to claim 2, wherein
said addition unit selects a value corresponding to the number of transmission stop frames information from among a pre-provided set of plural discrete values and adds said selected value to a control channel corresponding to the first data set.

5. The wireless telecommunication apparatus (2) according to claim 4, further comprising
a storage unit for storing information indicating a correlation between said scheduling information and a bit string of one bit or more that expresses each of said plural discrete values, wherein
said addition unit selects a bit string corresponding to the number of transmission stop frames information from among said set of plural discrete values by referring to the storage unit and sets the bit string at a channel bit of a control channel corresponding to said first data set.

6. The wireless telecommunication apparatus (2) according to any of claims 2 to 5, wherein
said terminal apparatus (3) comprises a unit for diversity reception, wherein
a part of the operation of a reception antenna is stopped in the terminal apparatus (3), thereby stopping a process for receiving data during a time period indicated by the number of transmission stop frames information.

7. The wireless telecommunication apparatus (2) according to any of claims 2 to 6, further comprising
performing an automatic gain control during a time period indicated by the number of transmission stop frames information in said terminal apparatus (3).

8. The wireless telecommunication apparatus (2) according to any of claims 2 to 7, further comprising
performing a search for carrying out a handover between different frequencies during a time period indicated by the number of transmission stop frames information in said terminal apparatus (3).

9. The wireless telecommunication apparatus (2) according to any preceding claim, further comprising
an invalidation unit for invalidating said scheduling information.

10. A mobile terminal apparatus (3) used for a wireless telecommunication system (1) employing a time division multiple access system, comprising
a judgment unit for judging data addressed to the mobile terminal apparatus (3) itself;
an analysis unit for analyzing a control channel related to data judged by the judgment unit as being addressed to the mobile terminal apparatus (3);
a readout unit for reading, from the control channel, scheduling information indicating a timing for when data addressed to the mobile terminal apparatus (3) will next be received; and
a stop unit for stopping a circuit from receiving data during a predetermined time period in accordance with scheduling information read by the readout unit.

11. A wireless telecommunication method, comprising:
determining an allocation of a first frame and a second frame for a first data set to be transmitted to a terminal apparatus (3) and a second data set to be transmitted thereto after the first data set;
generating scheduling information for notifying the terminal apparatus (3) of a timing of transmitting the second data set on the basis of a relative number of Frames for indicating the number of second frames relative to that of the first frame; and
adding scheduling information generated by the generation unit to a control channel corresponding to the first data set and sending said scheduling information to the terminal apparatus (3).
